# EUROPEAN PATENT APPLICATION

(11) **EP 1 760 942 A1**
(43) Date of publication of application: **07.03.2007**
(21) Application number: 04746836.8
(22) Date of filing: 25.06.2004
(51) Int. Cl.: H04L 12/28, H04Q 7/36, H04L 7/00

(54) **METHOD FOR SYNCHRONIZING TIME BETWEEN BASE STATIONS, TIMING MASTER DEVICE, AND BASE STATION**

(71) Applicant: MITSUBISHI DENKI KABUSHIKI KAISHA, Tokyo 100-8310 (JP)
(72) Inventor: SHIROKURA, Yoshihiko Mitsubishi Denki K. K., Tokyo 100-8310 (JP); TOMISAWA, Toshiaki Mitsubishi Denki K. K., Tokyo 100-8310 (JP)
(74) Representative: Pfenning, Meinig & Partner GbR
(86) International application number: PCT/JP2004/009367
(87) International publication number: WO 2006/001074

(57) **Abstract**

APs (130a to 130c) adjust a local station standard timer of the local station that measures time being the standard of the local station, based on a timing packet transmitted from a timing master device (120) at each preset timing of time synchronization adjustment, and then measures a delay time of a network from the timing master device (120) to the local station using a measurement packet, to perform fine adjustment on the local station standard timer based on the delay time measured.

## Description

### TECHNICAL FIELD

The present invention relates to a method of synchronizing time between plural base stations arranged in a wireless local-area-network (LAN) system, and more particularly, to a method of synchronizing time between base stations, a timing master device, and a base station, taking into account a delay time of a network.

### BACKGROUND ART

With a spread of the Internet, the LAN in a home or a building is often installed based on a wireless communication. The wireless LAN complies with the IEEE 802.11 physical layer and MAC layer, and multiplexing of multiple users is implemented by access control based on a carrier sense multiple access with collision avoidance (CSMA/CA) system (see, for example, Non-patent literature 1).

In recent years, not only the LAN is installed in the home or the building, but also plural base stations are planarly arranged in the wireless LAN to construct a wide area network. The wide area network using the conventional wireless LAN performs an exclusive control over the base stations based on the CSMA/CA system. Therefore, interference between the base stations causes a decrease in a data throughput.

To cope with the problem, it is necessary to synchronize time between the base stations. Patent literature 1 discloses a conventional technology for time synchronization between the base stations in the wire communication. In a timestamp synchronization method described in Patent Literature 1, timestamps are synchronized by transmitting a first instruction from a control node at a first time, transmitting a second instruction from the control node at a second time later than the first time, calculating a difference between a start timestamp value and a current timestamp value by each node (base station), and adding the calculated difference to the current timestamp value. In other words, the time of the control node is set as the standard time of a system, and each base station measures the time from a reception of the first instruction to a reception of the second instruction by a local station timer, and calculates a difference using the timestamp value of the second instruction, to adjust the timer of the local station.
Non-Patent Literature 1:
IEEE 802.11 Wireless LAN Medium Access Control (MAC) and Physical Layer (PHY) Specifications 1999 Edition
Patent Literature 1:
Japanese Patent Publication No. 2002-517132

By applying the timestamp synchronization (inter-base-station time synchronization) method described in Patent Literature 1 to the wireless LAN system described in Non-Patent Literature 1 in which the base stations are planarly arranged, timers in the base stations can be synchronized to the timer of the control node.

In the conventional technology described in Patent Literature 1, however, a delay time in the network is not considered. The delay time indicates a delay between the reception of the first instruction by a base station and the reception of the second instruction transmitted from the control node. Therefore, an error in time synchronization occurs due to the delay in the network, and reduction in data throughput due to interference between base stations can not be suppressed.

The present invention has been achieved to solve at least the problems in the conventional technology, and it is an object of the present invention to obtain an inter-base-station time synchronization method, a timing master device, and a base station for suppressing reduction in data throughput by establishing time synchronization between base stations allowing for a delay time of a network when a plurality of base stations are planarly arranged in a wireless LAN system.

### DISCLOSURE OF INVENTION

A method of synchronizing time of a plurality of base stations connected to a network to standard time of a timing master device, according to one aspect of the present invention, includes time adjustment starting including the timing master device transmitting a timing packet for synchronizing the time of the base stations at each cycle of preset time synchronization adjustment timing; first time adjusting including the base stations adjusting a local station standard timer based on the timing packet; delay time measuring including the base stations measuring a delay time of the network from the timing master device to a local station; and second time adjusting including the base stations adjusting the local station standard timer based on the delay time measured at the delay time measuring.

According to the present invention, the base station adjusts the local station standard timer that measures time, being the standard of the local station, based on the timing packet transmitted from the timing master device at each preset timing of time synchronization adjustment, and then measures a delay time of the network from the timing master device to the local station, to perform fine adjustment on the local station standard timer based on the delay time measured.

### BRIEF DESCRIPTION OF DRAWINGS

Fig. 1 is a schematic of a structure of a communication system to which an inter-base-station time synchronization method according to a first embodiment of the present invention is applied;
Fig. 2 is a block diagram of a configuration of a timing master device shown in Fig. 1;
Fig. 3 is a block diagram of a configuration of a base station (AP) shown in Fig. 1;
Fig. 4 is a flowchart of a processing procedure for an operation of the communication system to which the inter-base-station time synchronization method according to the first embodiment of the present invention is applied;
Fig. 5 is a schematic of a structure of a communication system to which an inter-base-station time synchronization method according to a second embodiment of the present invention is applied;
Fig. 6 is a block diagram of a configuration of a clock-master base station (AP) shown in Fig. 5;
Fig. 7 is a schematic of a structure of a communication system to which an inter-base-station time synchronization method according to a third embodiment of the present invention is applied; and
Fig. 8 is a block diagram of a configuration of a base station (AP) shown in Fig. 7.

### BEST MODE(S) FOR CARRYING OUT THE INVENTION

Exemplary embodiments of a method of synchronizing time between base stations, a timing master device, and a base station according to the present invention are explained in detail below with reference to the accompanying drawings. It should be noted that the present invention is not limited by these embodiments.

### First Embodiment

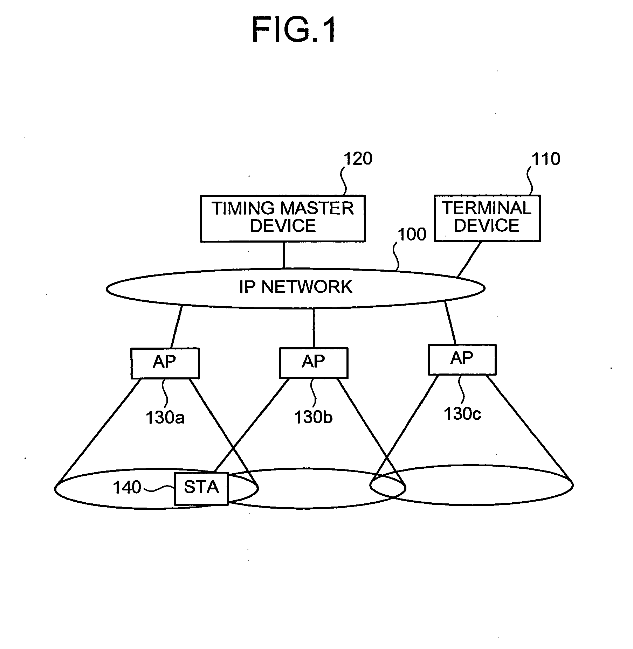

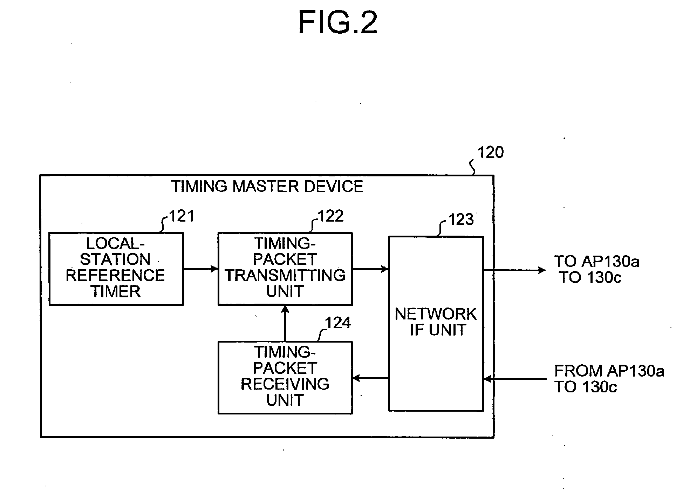

A first embodiment of the present invention is explained with reference to Figs. 1 to 4. Fig. 1 is a schematic of a configuration of a communication system to which an inter-base-station time synchronization method according to the first embodiment is applied. The communication system shown in Fig. 1 includes a plurality (three in this case) of base stations (hereinafter, "AP") 130a to 130c, a timing master device 120, and a terminal device 110, which are connected to an IP network 100. A wireless LAN terminal device (hereinafter, "STA") 140 is connected to the AP 130a through wireless communication and performs communications with the terminal device 110 through the AP 130a. Although the STA 140 and the terminal device 110 are respectively shown as single units in Fig. 1, actually, a plurality of STAs 140 and terminal devices 110 communicate with each other through the APs 130a to 130c, respectively.

The timing master device 120 is a device that becomes the standard time of the APs 130a to 130c in the communication system, and informs standard timer information to the APs 130a to 130c at each frequency of preset timing of time synchronization adjustment.

Fig. 2 is a block diagram of a configuration of the timing master device 120 shown in Fig. 1. The timing master device 120 includes a local station standard timer 121, a timing-packet transmitting unit 122, a network IF unit 123, and a timing-packet receiving unit 124. The timing-packet transmitting unit 122 and the timing-packet receiving unit 124 implement a function as a timing-packet transceiving unit in the claims of the present invention.

The local station standard timer 121 measures time that becomes the standard timing of the local station. The local station standard timer 121 generates a timing packet for informing the standard timer information to the APs 130a to 130c at each frequency of preset timing of time synchronization adjustment.

The timing-packet transmitting unit 122 transmits a timing packet generated by the local station standard timer 121 and a measurement packet that is transmitted from any of the APs 130a to 130c and is returned thereto by the timing master device 120.

The timing-packet receiving unit 124 receives the measurement packets transmitted from the APs 130a to 130c. The network IF unit 123 has an interface function with the IP network 100, and outputs a packet received from the IP network 100 to the timing receiving unit, and outputs a signal received from the timing-packet transmitting unit 122 to the IP network 100.

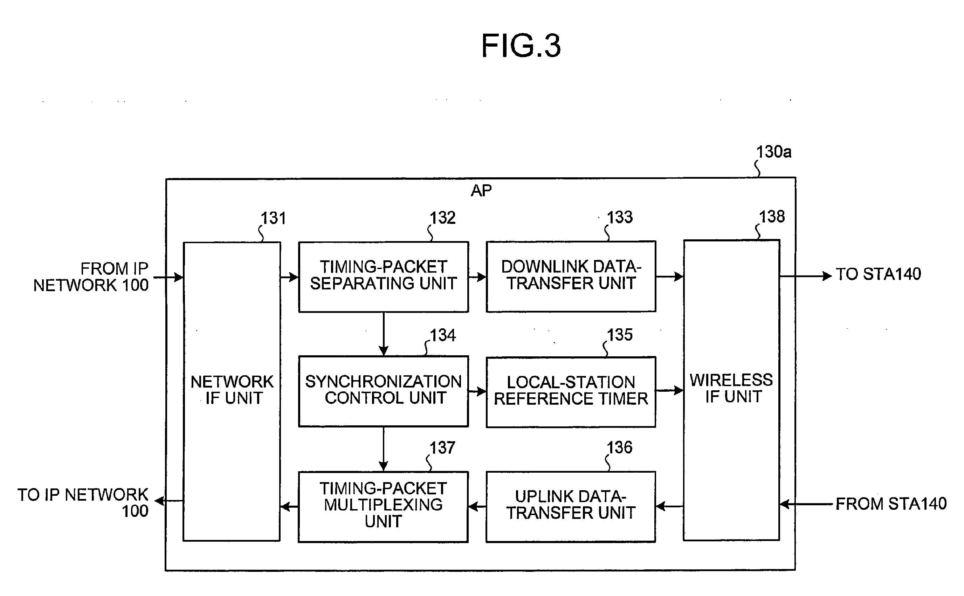

The APs 130a to 130c are the base stations for the wireless LAN, and have the same function as one another. The function of AP is explained below with reference to the block diagram of a configuration of the AP 130a shown in Fig. 3.

The AP 130a includes a network IF unit 131, a timing-packet separating unit 132, a downlink data-transfer unit 133, a wireless IF unit 138, an uplink data-transfer unit 136, a timing-packet multiplexing unit 137, a synchronization control unit 134, and a local station standard timer 135.

The network IF unit 131 has an interface function with the IP network 100, and outputs a packet received from the IP network 100 to the timing-packet separating unit 132 and outputs a packet received from the timing-packet multiplexing unit 137 to the IP network 100.

The timing-packet separating unit 132 determines whether the packet received from the IP network 100 through the network IF unit 131 is a timing packet or a measurement packet, or a downlink packet to the STA 140. If the packet received is the timing packet or the measurement packet, then the timing-packet separating unit 132 outputs the timing packet to the synchronization control unit 134, and outputs the packet received to the downlink data-transfer unit 133 if the packet received is addressed to the STA 140.

The downlink data-transfer unit 133 has a data transfer function in a downlink direction (a direction from the IP network 100 to the STA 140 under the local station) provided in a base station for an ordinary wireless LAN, and outputs the packet (downlink data) addressed to the STA 140 input from the timing-packet separating unit 132, to the wireless IF unit 138.

The wireless IF unit 138 has an interface function for the wireless LAN, and subjects the packet addressed to the STA 140 input from the downlink data-transfer unit 133 to encoding and modulation processes, to generate a signal for a wireless line, and transmits the signal generated to the STA 140. Furthermore, the wireless IF unit 138 subjects the signal received from the STA 140 to preset demodulation and decoding processes, to generate a packet (uplink data) addressed to the terminal device 110. The wireless IF unit 138 outputs the packet generated to the uplink data-transfer unit 136.

The uplink data-transfer unit 136 has a data transfer function in an uplink direction (a direction from the STA 140 under the local station to the IP network 100) provided in a base station of an ordinary wireless LAN, and outputs the packet addressed to the terminal device 110 received through the wireless IF unit 138, to the timing-packet multiplexing unit 137.

The timing-packet multiplexing unit 137 multiplexes the measurement packet received from the synchronization control unit 134 on the packet addressed to the terminal device 110, to output them to the network IF unit 123.

The local station standard timer 135 measures time that becomes the standard timing of the local station. The synchronization control unit 134 adjusts the local station standard timer 135 based on the timing packet input from the timing-packet separating unit 132.

The synchronization control unit 134 receives the timing packet, and then generates a measurement packet for measuring a round trip time (RTT: round trip time) with the timing master device 120, and outputs the measurement packet generated to the timing-packet multiplexing unit 137. When receiving the measurement packet returned from the timing master device 120, the synchronization control unit 134 performs fine adjustment on the local station standard timer 135 based on the measurement packet received.

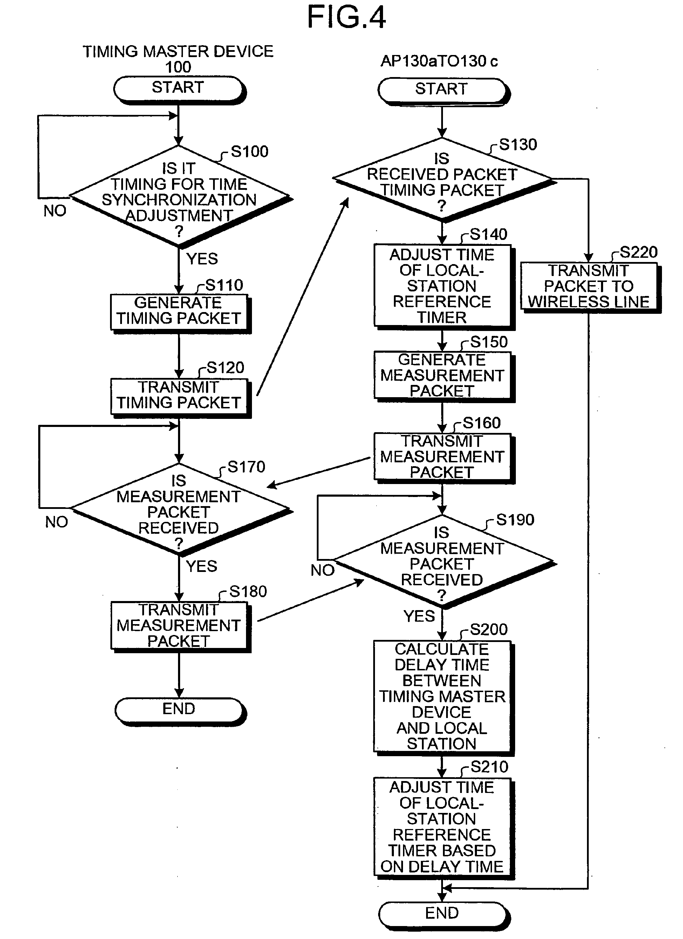

The operation of the communication system, to which the inter-base-station time synchronization method according to the first embodiment is applied, is explained below with reference to the flowchart of Fig. 4. When it becomes a preset timing of time synchronization adjustment, the local station standard timer 121 of the timing master device 120 generates a timing packet for informing standard timer information (steps S100, S110). If the frequency of timing of time synchronization adjustment is different from beacon frequencies or TSF (Timing Synchronization Function) frequencies of the APs 130a to 130c, the local station standard timer 121 generates a timing packet including time information measured by the local station standard timer 121. If the frequency of timing of time synchronization adjustment is the same as the beacon frequency or the TSF frequency of each of the APs 130a to 130c, there is no need to include the time of the local station standard timer 121 in the timing packet because the time at which the timing packet arrives at the APs 130a to 130c can be set as the standard. The local station standard timer 121 outputs the timing packet generated to the timing-packet transmitting unit 122.

The timing-packet transmitting unit 122 of the timing master device 120 transmits the timing packet generated by the local station standard timer 121 to the IP network 100 through the network IF unit 123 (step S120).

The timing packet, the packet addressed to the STA 140, and the packet addressed to the terminal device 110 are on the IP network 100. The timing-packet separating unit 132 of each of the APs 130a to 130c determines whether the packet received through the network IF unit 131 is the timing packet (step S130).

If it is determined that the packet received is the timing packet, the timing-packet separating unit 132 of each of the APs 130a to 130c outputs the timing packet to the synchronization control unit 134.

The synchronization control unit 134 of each of the APs 130a to 130c adjusts the time of the local station standard timer 135 based on the timing packet (step S140). More specifically, if time information is included in the timing packet, the synchronization control unit 134 adjusts the time of the local station standard timer 135 to the time in the time information included in the timing packet. If the time information is not included in the timing packet, the synchronization control unit 134 adjusts the time of the local station standard timer 135 based on the beacon frequency or the TSF frequency of the local device and the timing-packet received time.

The synchronization control unit 134 of each of the APs 130a to 130c adjusts the local station standard timer 135 based on the timing packet, and then generates a measurement packet addressed to the timing master device 120 (step S150). The synchronization control unit 134 outputs the measurement packet generated to the timing-packet multiplexing unit 137.

The timing-packet multiplexing unit 137 multiplexes the packet from the uplink data-transfer unit 136 on the measurement packet and transmits the measurement packet to the IP network 100 through the network IF unit 131 (step S160).

When receiving the measurement packet through the network IF unit 123 (step S170), the timing-packet receiving unit 124 of the timing master device 120 outputs the measurement packet received to the timing-packet transmitting unit 122. The timing-packet transmitting unit 122 changes the destination of the measurement packet to any of the APs 130a to 130c which transmits the measurement packet, and transmits the measurement packet of which destination is changed through the network IF unit 123 (step S180). In other words, the measurement packets transmitted from the APs 130a to 130c are respectively returned to the APs 130a to 130c as the transmission sources by the timing master device 120 in the same manner as, for example, PING (Packet INternet Groper) that diagnoses a TCP/IP (Transmission Control Protocol/Internet Protocol) network.

When receiving the measurement packet, the timing-packet separating unit 132 of each of the APs 130a to 130c outputs the measurement packet received to the synchronization control unit 134 (step S190).

The synchronization control unit 134 of each of the APs 130a to 130c calculates a time being 1/2 of a difference in time from transmission of the measurement packet to reception thereof. More specifically, the synchronization control unit 134 calculates a delay time in packet transfer from the timing master device 120 to the local station (step S200). The time difference may be obtained by measuring the time from transmission of the measurement packet to reception thereof. Alternatively, the time of the local station standard timer 135 at which the measurement packet is generated may be included in the measurement packet, and a difference, between the time of the local station standard timer 135 at which the measurement packet is received and the time included in the measurement packet, may be calculated. The synchronization control unit 134 adjusts the time of the local station standard timer 135 based on the delay time calculated (step S210).

On the other hand, if it is determined that the packet received is the timing packet or a packet (a packet for the STA 140) other than the measurement packet, the timing-packet separating unit 132 of each of the APs 130a to 130c outputs the packet received to the downlink data-transfer unit 133, and the downlink data-transfer unit 133 transmits the packet addressed to the STA 140, to the wireless line through the wireless IF unit 138 (step S220).

According to the first embodiment, each of the APs 130a to 130c adjusts the local station standard timer 135 that measures the time being the standard of the local station, based on the timing packet transmitted from the timing master device 120 at each preset timing of time synchronization adjustment, and then measures a delay time of the network from the timing master device 120 to the local station using the measurement packet, to perform fine adjustment on the local station standard timer 135 based on the delay time measured. Therefore, time synchronization of the APs 130a to 130c, which are planarly arranged in consideration of the delay time of the network, can be performed, and hence, data interference can be avoided and a process such as QoS (Quality of Service) control can be more accurately performed.

Although it is explained according to the first embodiment that the APs 130a to 130c measure once the delay time of the IP network 100 using the measurement packet, the measurement may be carried out a plurality of times. In this case, the synchronization control unit 134 of each of the APs 130a to 130c only has to include a smoothing function for measurement of a delay time. The smoothing function performs fine adjustment on the local station standard timer 135 using an average value of delay times of the IP network 100 measured or an average value of delay times remaining after some of delay times being beyond a certain range are excluded. This allows suppression of an error in synchronization establishment due to the delay time caused by temporary congestions on the IP network 100 or the like.

### Second Embodiment

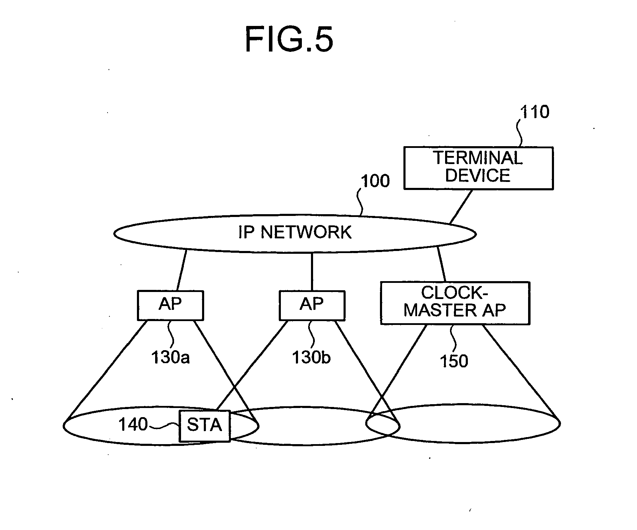

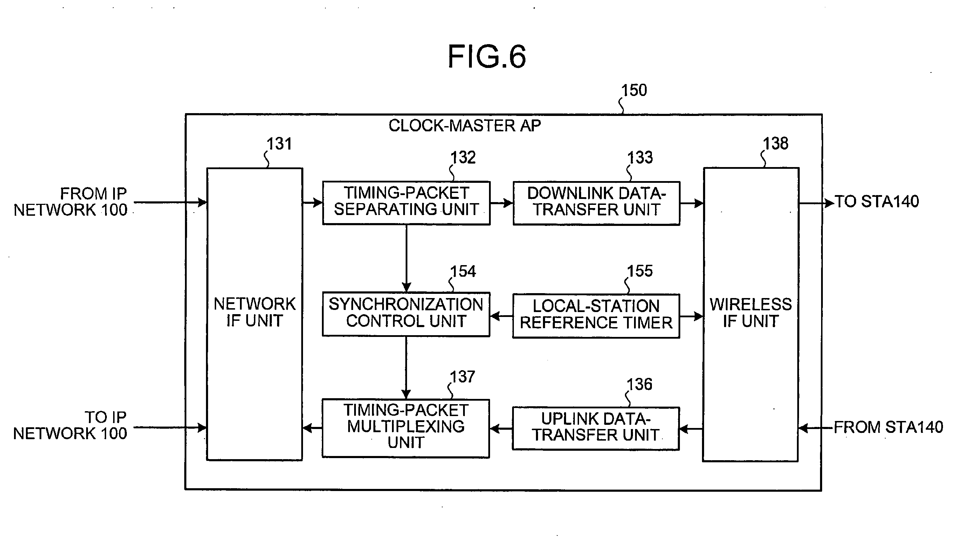

A second embodiment of the present invention is explained below with reference to Figs. 5 and 6. According to the first embodiment, the timing master device informs the standard timer information. In the second embodiment, the timing master device is not provided but a specified base station (clock-master base station) informs the standard timer information.

Fig. 5 is a schematic of a structure of a communication system to which an inter-base-station time synchronization method according to the second embodiment is applied. The communication system shown in Fig. 5 includes a clock-master base station (hereinafter, "clock-master AP") 150 instead of the AP 130c, but does not include the timing master device 120 of the communication system according to the first embodiment of Fig. 1. The same standard signs are assigned to components having the same functions as those of the first embodiment, and explanation thereof is omitted.

The clock-master AP 150 is a base station for the wireless LAN and has a function of adjusting the standard time for the APs 130a and 130b in the communication system. Fig. 6 is a block diagram of the configuration of the clock-master AP 150 shown in Fig. 5. The clock-master AP 150 includes a synchronization control unit 154 and a local station standard timer 155 instead of the synchronization control unit 134 and the local station standard timer 135 of the AP 130a according to the first embodiment with reference to Fig. 3. The same standard signs are assigned to components having the same functions as those of the AP 130a according to the first embodiment, and explanation thereof is omitted.

The local station standard timer 155 measures time by independent synchronous operation as master timing without being controlled by the synchronization control unit 154. The local station standard timer 155 generates a timing packet for informing standard timer information to the APs 130a and 130b at each frequency of preset timing of time synchronization adjustment.

The synchronization control unit 154 outputs the timing packet input from the local station standard timer 155 to the timing-packet multiplexing unit 137, and outputs the measurement packet input from the timing-packet separating unit 132 to the timing-packet multiplexing unit 137.

The operation of the communication system, to which the inter-base-station time synchronization method according to the second embodiment is applied, is explained below. It is noted that the operation of the communication system, to which the inter-base-station time synchronization method according to the second embodiment is applied, is such that the operation of the timing master device 120, explained according to the first embodiment with reference to the flowchart of Fig. 4, is executed by the clock-master AP 150. Therefore, detailed explanation thereof is omitted.

If it becomes a preset timing of time synchronization adjustment, the local station standard timer 155 of the clock-master AP 150 generates a timing packet for informing standard timer information, and transmits the timing packet to the APs 130a and 130b through the synchronization control unit 154, the timing-packet multiplexing unit 137, and the network IF unit 131.

When receiving the timing packet, the timing-packet receiving unit 124 of each of the APs 130a and 130b outputs the timing packet received to the synchronization control unit 134, and the synchronization control unit 134 adjusts the time of the local station standard timer 135 based on the timing packet. The synchronization control unit 134 of each of the APs 130a and 130b adjusts the time of the local station standard timer 135, and then generates a measurement packet, to transmit the measurement packet generated to the clock-master AP 150 through the timing-packet multiplexing unit 137 and the network IF unit 131.

When receiving the measurement packet through the network IF unit 131, the timing-packet separating unit 132 of the clock-master AP 150 outputs the measurement packet received to the synchronization control unit 154. The synchronization control unit 154 changes the destination of the measurement packet to the APs 130a and 130b which transmit the measurement packet, and transmits the measurement packet to the APs 130a and 130b through the timing-packet multiplexing unit 137 and the network IF unit 131.

When receiving the measurement packet, the timing-packet separating unit 132 of each of the APs 130a to 130c outputs the measurement packet received to the synchronization control unit 134. The synchronization control unit 134 of each of the APs 130a and 130b calculates a delay time in packet transfer between the timing master device 120 and the local station, and adjusts the local station standard timer 135 based on the delay time calculated.

On the other hand, if it is determined that the packet received is neither the timing packet nor the measurement packet, i.e., the packet addressed to the STA 140, the timing-packet separating unit 132 of each of the APs 130a and 130b and the clock-master AP 150 transmits the packet received to the wireless line through the downlink data-transfer unit 133 and the wireless IF unit 138.

In the second embodiment, the clock-master AP 150 that becomes the standard of time is provided among base stations connected to the IP network 100, and each of the APs 130a and 130b adjusts the local station standard timer 135 that measures the time being the standard of the local station, based on the timing packet transmitted from the clock-master AP 150 at each preset timing of time synchronization adjustment, and then measures a delay time of the network from the clock-master AP 150 to the local station using the measurement packet, to perform fine adjustment on the local station standard timer 135 based on the delay time measured. Therefore, the time of the APs 130a and 130b, which are planarly arranged in consideration of the delay time of the network, can be synchronized to each other, data interference can be avoided, and the process such as QoS (Quality of Service) control can be more accurately performed.

Furthermore, in the second embodiment, the clock-master AP 150 is configured to add the function of transmitting the timing packet to the AP 130a, thus reducing the cost of this device, as compared with the case where the timing master device is provided as an independent device.

Although it is explained in the second embodiment that the APs 130b and 130c measure once the delay time of the IP network 100 using the measurement packet, the measurement may be carried out a plurality of times. In this case, the synchronization control unit 134 of each of the APs 130b and 130c only has to include a smoothing function for measurement of a delay time. The smoothing function performs fine adjustment on the local station standard timer 135 using an average value of delay times of the IP network 100 measured or an average value of delay times remaining after some of delay times being beyond the certain range are excluded. This allows suppression of an error in synchronization establishment due to the delay time caused by temporary congestions on the IP network 100 or the like.

### Third Embodiment

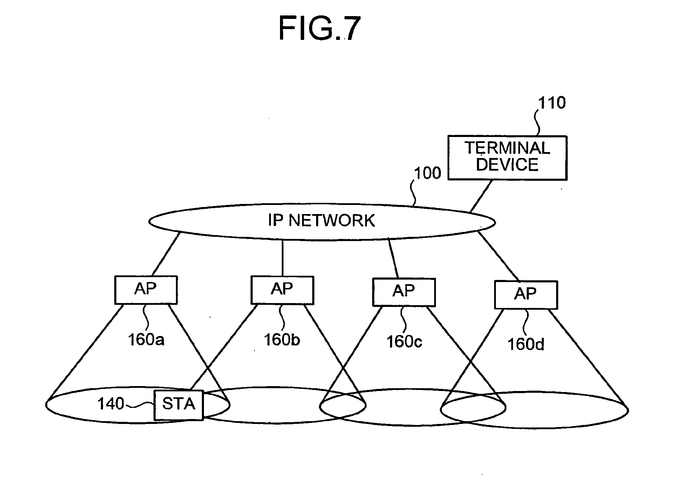

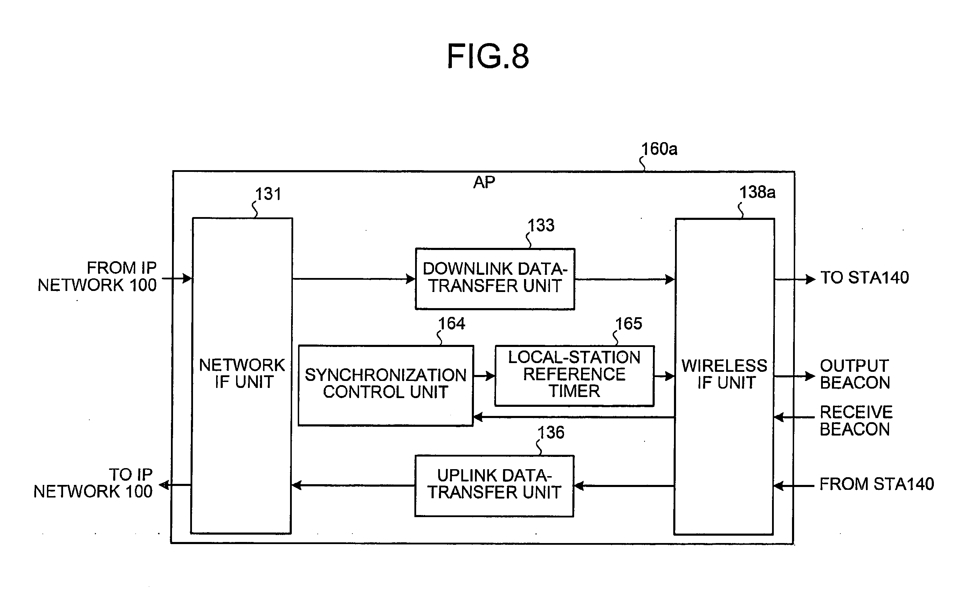

A third embodiment of the present invention is explained below with reference to Figs. 7 and 8. According to the first and the second embodiments, the time between base stations is synchronized with each other based on the timing packet and the measurement packet. According to the third embodiment, beacons periodically transmitted by base stations are used to synchronize time among the base stations.

Fig. 7 is a schematic of a structure of a communication system to which an inter-base-station time synchronization method according to the third embodiment is applied. The communication system shown in Fig. 7 includes APs 160a to 160d, instead of the APs 130a, 130b and the clock-master AP 150 according to the second embodiment shown in Fig. 5. The same standard signs are assigned to components having the same functions as those of the second embodiment, and explanation thereof is omitted.

The APs 160a to 160d are base stations for a wireless LAN and have the same function as one other. The function of AP is explained with reference to a block diagram of the configuration of the AP 160a shown in Fig. 8.

The AP 160a includes a synchronization control unit 164, a local station standard timer 165, and a wireless IF unit 138a, instead of the synchronization control unit 134, the local station standard timer 135, and the wireless IF unit 138, but does not include the timing-packet separating unit 132 and the timing-packet multiplexing unit 137 of the AP 130a according to the first embodiment shown in Fig. 3. The same standard signs are assigned to components having the same functions as those of the first embodiment, and explanation thereof is omitted.

The wireless IF unit 138a has the interface function for the wireless LAN according to the first embodiment, and further has a function of transmitting a beacon that includes relative distance information between a preset standard AP and the local station. The relative distance information is position information in which the standard AP is set as an original point. For example, it is position information for the local station based on X coordinate and Y coordinate with the standard AP being the original point. The position information is preset in the wireless IF unit 138a, and the wireless IF unit 138a includes a function of transmitting a beacon including the position information. The wireless IF unit 138a also includes a function of receiving a beacon from another base station and outputting the beacon received to the synchronization control unit 164.

The synchronization control unit 164 decides AP being the standard of time based on the position information in the beacon input from the wireless IF unit 138a and the position information for the local station, and adjusts the time of the local station standard timer 165 based on the time of the AP decided as the standard.

The local station standard timer 165 measures the time that becomes the standard timing of the local station, measures a beacon frequency, and causes the wireless IF unit 138a to transmit a beacon.

When any AP is set as the standard AP, the synchronization control unit 164 of the relevant AP does not adjust the local station standard timer 165, but the local station standard timer 165 measures the time by an independent synchronous operation as master timing.

The operation of the communication system, to which the inter-base-station time synchronization method according to the third embodiment is applied, is explained below.

The wireless IF unit 138a of each of the APs 160a to 160d transmits a beacon including the position information when the frequency becomes each preset beacon frequency. The wireless IF unit 138a searches for each beacon of the APs 160a to 160d to receive it. The wireless IF unit 138a of each of the APs 160a to 160d outputs the beacon received to the synchronization control unit 164.

The synchronization control unit 164 of each of the APs 160a to 160d calculates each relative distance between each of the APs 160a to 160d which transmits the beacon and the local station, and each relative distance between the standard AP and each of the APs 160a to 160d which transmits the beacon, based on the position information included in the beacons received and the position information for the local station.

Assume that the AP 160b receives beacons from the AP 160a and the AP 160c, and that the AP 160a is set as the standard AP. The synchronization control unit 164 of the AP 160b calculates a relative distance between the AP 160a and the local station, and a relative distance between the AP 160a and the AP 160a, based on the position information included in the beacon received from the AP 160a and the position information for the local station. Furthermore, the synchronization control unit 164 of the AP 160b calculates a relative distance between the AP 160c and the local station, and a relative distance between the AP 160a and the AP 160c, based on the position information included in the beacon received from the AP 160c and the position information for the local station.

The synchronization control unit 164 of each of the APs 160a to 160d selects any one of the APs 160a to 160d of which relative distance with the standard AP is shorter than the relative distance between the local station and the standard AP, and of which relative distance with the local station is short, based on the respective relative distances between each of the APs 160a to 160d which transmits the beacon calculated and the local station and the respective relative distances between the standard AP and each of the APs 160a to 160d which transmits the beacon.

The time information is included in the beacon in the IEEE 802.11-standard. The synchronization control unit 164 of each of the APs 160a to 160d adjusts the local station standard timer 165 based on the time information included in the beacon received from the selected one of the APs 160a to 160d. In other words, the synchronization control unit 164 adjusts the local station standard timer 165 based on any one of the APs 160a to 160d, as the standard timing, of which relative distance with the standard AP is shorter than the relative distance between the local station and the standard AP, and of which relative distance with the local station is short.

Since the AP 160a is the standard AP, the relative distance with the standard AP becomes 0. Therefore, the synchronization control unit 164 of the AP 160b selects the AP 160a and adjusts the local station standard timer 165 based on the time information included in the beacon from the AP 160a.

The AP 160c receives beacons from the AP 160b and the AP 160d. As shown in Fig. 7, since the relative distance between the AP 160b and the AP 160a is shorter than the relative distance between the AP 160d and the AP 160a, the AP 160c selects the AP 160b and adjusts the local station standard timer 165 based on the time information included in the beacon from the AP 160b.

In the third embodiment, the APs 160a to 160d transmit the beacons each including the relative distance between the preset standard AP 160a and the local station, select a base station to which the local station standard timer 165 is synchronized, based on the relative distances in the beacons transmitted from other base stations and the relative distance between the standard AP 160a and the local station, and synchronize the local station standard timer 165 to the base station selected. Therefore, there is no need to transmit the packet for synchronizing the local station standard timer 165 to the IP network 100, which allows time synchronization among the APs 160a to 160d which are planarly arranged, without reducing the throughput of the IP network 100.

"Synchronization complete information" indicating whether the local station standard timer 165 is adjusted, that is, whether synchronization is established, may be included in the beacon transmitted by the wireless IF unit 138a of each of the APs 160a to 160d. The synchronization control unit 164 of each of the APs 160a to 160d may thereby determine whether any one of the APs 160a to 160d, which transmits the beacon received, establishes the synchronization based on the synchronization complete information, and select any one of the APs 160a to 160d to which the local station standard timer 165 is synchronized, from among the APs 160a to 160d in which the synchronization is established. This allows selection of any one of the APs 160a to 160d in which the synchronization is surely established, and prevention of selection of any one of the APs 160a to 160d in which the synchronization is not established. Thus, all the APs 160a to 160d can synchronize their local station standard timers 165 to the standard station.

The wireless IF unit 138a of each of the APs 160a to 160d according to the third embodiment searches for the beacon, thereby learning the beacons of the peripheral APs 160a to 160d. By using this feature, the wireless IF unit 138a of each of the APs 160a to 160d may adjust the phase of the beacon transmitted by the local station so that the phase of the beacon does not interfere with the phases of the beacons transmitted by the peripheral APs 160a to 160d. This allows suppression of not only data interference but also beacon interference.

### INDUSTRIAL APPLICABILITY

The inter-base-station time synchronization method according to the present invention is useful for the communication systems using wireless LAN, and is especially suitable for wide area network systems using wireless LAN in which a plurality of base stations are planarly arranged.

## Claims

1. A method of synchronizing time of a plurality of base stations connected to a network to standard time of a timing master device, the method comprising:
time adjustment starting including the timing master device transmitting a timing packet for synchronizing the time of the base stations at each cycle of preset time synchronization adjustment timing;
first time adjusting including the base stations adjusting a local station standard timer based on the timing packet;
delay time measuring including the base stations measuring a delay time of the network from the timing master device to a local station; and
second time adjusting including the base stations adjusting the local station standard timer based on the delay time measured at the delay time measuring.

2. The method according to claim 1, wherein
the delay time measuring includes measuring the delay time a plurality of times, and
the second time adjusting includes adjusting the local station standard timer based on a delay time obtained by performing a smoothing process on the delay time measured a plurality of times.

3. The method according to claim 1, wherein
the delay time measuring includes
measurement starting including the base stations starting a measurement of a round trip time by transmitting a measurement packet to the timing master device;
returning including the timing master device returning the measurement packet to the base stations;
measurement ending including the base stations ending the measurement of the round trip time by receiving the measurement packet returned at the returning; and
delay time calculating including the base stations calculating the delay time of the network from the round trip time.

4. A method of synchronizing time of a plurality of base stations connected to a network to preset time of a clock-master base station, the method comprising:
time adjustment starting including the clock-master base station transmitting a timing packet for synchronizing time of the base stations at each cycle of preset time synchronization adjustment timing;
first time adjusting including the base stations adjusting a local station standard timer based on the timing packet;
delay time measuring including the base stations measuring a delay time of the network from the clock-master base station to a local station; and
second time adjusting including the base stations adjusting the local station standard timer based on the delay time measured at the third step.

5. The method according to claim 4, wherein
the delay time measuring includes measuring the delay time a plurality of times, and
the second time adjusting includes adjusting the local station standard timer based on a delay time obtained by performing a smoothing process on the delay time measured a plurality of times.

6. The method according to claim 4, wherein
the delay time measuring includes
measurement starting including the base stations starting a measurement of a round trip time by transmitting a measurement packet to the clock-master base station;
returning including the clock-master base station returning the measurement packet to the base stations;
measurement ending including the base stations ending the measurement of the round trip time by receiving the measurement packet returned at the returning; and
delay time calculating including the base stations calculating the delay time of the network from the round trip time.

7. A method of synchronizing time of a plurality of base stations connected to a network to time of a standard base station, the method comprising:
beacon transmitting including the standard base station and the base stations transmitting a beacon including a relative distance between the standard base station and a local station;
base station selecting including the base stations receiving the beacon from other station and selecting a base station for synchronizing the time based on the relative distance in the received beacon and the relative distance between the local station and the standard base station; and
time adjusting including the base stations adjusting a local station standard timer that counts time that becomes a standard of the local station, based on the beacon transmitted from the base station selected at the base station selecting.

8. The method according to claim 7, wherein
the base station selecting includes selecting a base station with the relative distance in the received beacon shorter than the relative distance between the local station and the standard base station, and with a distance to the local station short.

9. The method according to claim 7, wherein
the beacon transmitting includes transmitting a beacon including synchronization complete information indicating whether the local station standard timer is adjusted at the time adjusting, and
the base station selecting includes selecting a base station for synchronizing the time from among the base stations that transmitted the beacon in which the synchronization complete information indicates that the local station standard timer is adjusted.

10. The method according to claim 7, wherein
the beacon transmitting includes transmitting a beacon in such a manner that the beacon is adjusted not to interfere with beacons from other base stations based on a reception cycle of the beacons from the other base stations received at the base station selecting.

11. A timing master device that provides standard time to which time of a plurality of base stations connected to a network is synchronized, the timing master device comprising:
a local station standard timer that counts time; and
a timing-packet transceiving unit that generates a timing packet informing that it is a timing for a time synchronization adjustment at each cycle of preset time synchronization adjustment timing, transmits the generated timing packet to the base stations, and upon receiving a measurement packet from the base stations, returns the received measurement packet to a transmission source.

12. The timing master device according to claim 11, wherein
the timing-packet transceiving unit involves the time counted by the local station standard timer in the timing packet.

13. A base station that is connected to a network, a plurality of the base stations being arranged to connect a wireless terminal to the network, the base station comprising:
a local station standard timer that counts standard time of a local station; and
a synchronization control unit that receives a timing packet from a standard device that is a standard of time of the base stations connected to the network, adjusts the local station standard timer based on the received timing packet, measures a delay time of the network from the standard device to the local station, and performs a fine adjustment of the local station standard timer based on the measured delay time.

14. A base station that is connected to a network, a plurality of the base stations being arranged to connect a wireless terminal to the network, the base station comprising:
a local station standard timer that counts standard time of a local station;
a wireless interface unit that transmits a beacon including a relative distance between a preset standard base station and the local station, and receives a beacon from other base station; and
a synchronization control unit that synchronizes the local station standard timer to a base station selected based on the relative distance included in the beacon received from the other base station and the relative distance between the local station and the standard base station.

15. The base station according to claim 14, wherein
the synchronization control unit selects a base station, with the relative distance in the received beacon by the wireless interface unit shorter than the relative distance between the local station and the standard base station, and with a distance to the local station short.

16. The base station according to claim 14, wherein
the wireless interface unit transmits a beacon including synchronization complete information indicating whether the local station standard timer is adjusted by the synchronization control unit, and
the synchronization control unit selects a base station for synchronizing the time from among the base stations that transmitted the beacon in which the synchronization complete information indicates that the local station standard timer is adjusted.

17. The base station according to claim 14, wherein
the wireless interface unit transmits a beacon in such a manner that the beacon is adjusted not to interfere with beacons from other base stations based on a reception cycle of the beacons from the other base stations.
